# EUROPEAN PATENT SPECIFICATION

(11) **EP 2 835 047 B1**
(45) Date of publication and mention of the grant of the patent: **20.09.2017**
(21) Application number: 13724638.5
(22) Date of filing: 03.04.2013
(51) Int. Cl.: A01G 27/00

(54) **MODULAR INTEGRATED SYSTEM FOR SEED GERMINATION, CULTIVATION, PLANTING, FERTILIZING AND MAINTENANCE OF PLANTS**
INTEGRIERTES MODULARES SYSTEM ZUR SAATKIEMUNG, KULTIVIERUNG, BEPFLANZUNG, DÜNGUNG UND PFLANZENWARTUNG
SYSTÈME INTÉGRÉ MODULAIRE POUR LA GERMINATION DE GRAINES, LA CULTURE, LA PLANTATION, LA FERTILISATION ET L'ENTRETIEN DE PLANTES

(30) Priority: 03.04.2012 PT 2012106236
(43) Date of publication of application: 11.02.2015
(73) Proprietor: Quizcamp-Fabrico e Comércio Produtos Alimentares, S.A., 1400-249 Lisboa (PT)
(72) Inventor: RODRIGUES, Manuel Maria, P-2790-151 Carnaxide (PT)
(74) Representative: Pereira da Cruz, Joao
(86) International application number: PCT/PT2013/000020
(87) International publication number: WO 2013/169129

(56) References cited:
- WO-A1-95/10934
- WO-A1-2007/084020
- WO-A1-2011/044857
- FR-A- 1 085 069
- FR-A1- 2 683 121

## Description

### Scope of the invention

This invention relates to a modular integrated system aimed at cultivating, planting, fertilizing and promoting the maintenance of plants.

More particularly, this invention relates to the so-called and currently well-known urban farms, enabling their users to practice gardening and agriculture with several plant species in urban spaces.

The modular integrated system disclosed in this invention is also designed to be used in a more intensive way, namely as plant nurseries and/or for the breeding of other plant varieties.

### Prior art

Several devices are already known in the art which allow gardening and agriculture of different plant species to be practiced in urban spaces.

These devices include the one disclosed in the international patent application PCT WO2007084020. In effect, it relates to a modular container system which is appropriate for growing plant varieties but which, per se, does not provide an irrigation system, the latter being essential to the good progress of any process aimed at cultivating and maintaining plants.

Other modules for growing and maintenance such as plant stands, different types of flower pots and similar products are commonly used for the above mentioned purposes. However, these also lack an integrated irrigation system.

Obviously, the existing systems can be provided with an independent irrigation system. However, those systems show some complexity, in addition to being expensive and subject to failure.

The French patent application FR2683121 discloses an integrated system according to the preamble of claim 1.

### Summary of the invention

This invention discloses a modular integrated system aimed at cultivating, planting, fertilizing and promoting the maintenance of plants according to claim 1. Preferred characteristics of the invention are also provided according to the dependent claims.

Therefore, one objective of the invention is to conceive a modular integrated system aimed at cultivating, planting, fertilizing and promoting the maintenance of plants, which comprises an irrigation system whose fundamental characteristics are the following:
- a liquid receiver which includes a dosing element comprising two holes, respectively, one for the passage of the air feeding tube to the receiver and another for the discharge of liquid from the receiver under the action of gravity,
- a watertight platform for containing liquid and which is supplied by the said liquid receiver;
wherein the regulation of the water flow from the receiver is dictated by the difference of height between the air feeding tube to the receiver and the tube, which has its lower end bevelled, for the discharge of liquid under the action of gravity, i.e. the water will be discharged only and if the water level in the platform is lower than the length of the tube;
- at least one component for fitting the liquid receiver and/or for fitting at least one plant container;
- an absorbing cloth at the bottom of the component;
- drainage means for removing the excess water from the platform; and
- aerating means for the platform comprised of holes positioned above the water line.

Further benefits, characteristics and particulars of the invention will become clearer from the following description as regards the preferred embodiments, as well as by reference to the drawings, which are provided only for explanatory purposes and should not be restrictively construed.

### Brief description of the drawings

The following description is made with reference to the enclosed figures, which are given for illustrative purposes only and without any limiting character, wherein:
- Figure 1 is a perspective view of the preferred embodiment of the modular system with the three main parts disassembled;
- Figure 2 is a perspective view of the embodiment shown in Figure 1 but with all the parts duly assembled;
- Figures 3a, b and c are raised and perspective views, respectively, from the top and underneath the dosing element of the system which is the object of the invention;
- Figures 4a, b, c and d are, respectively, perspective view, plan view, cross-sectional view taken along the line BB, and exploded view, of another embodiment of the invention;

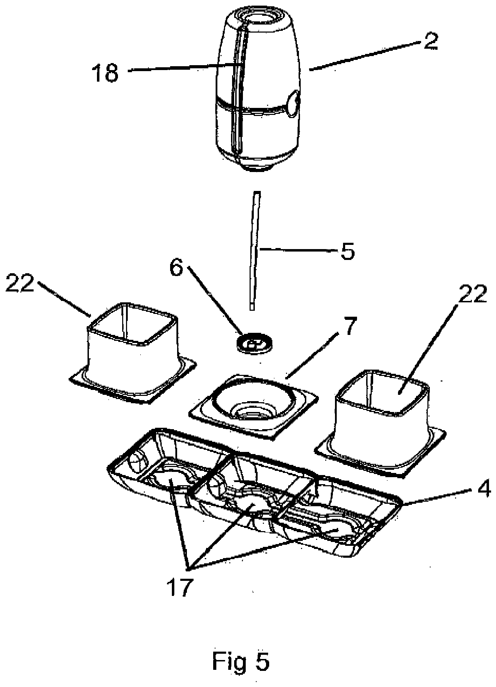

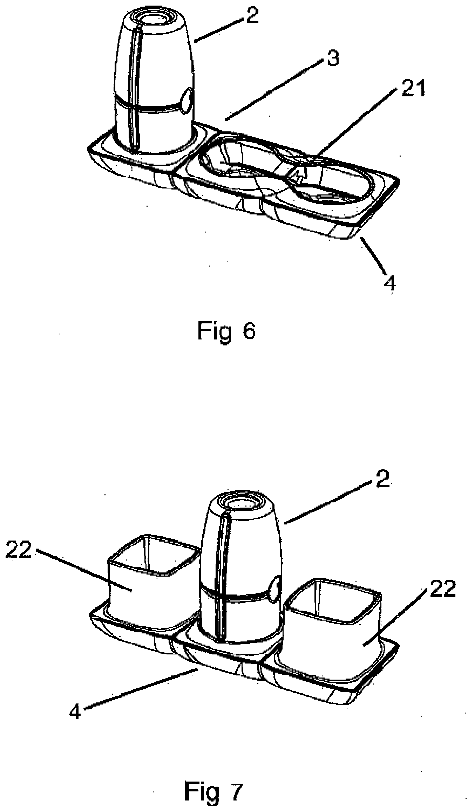

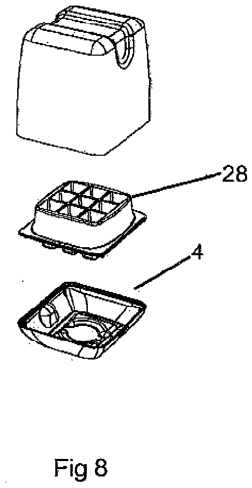

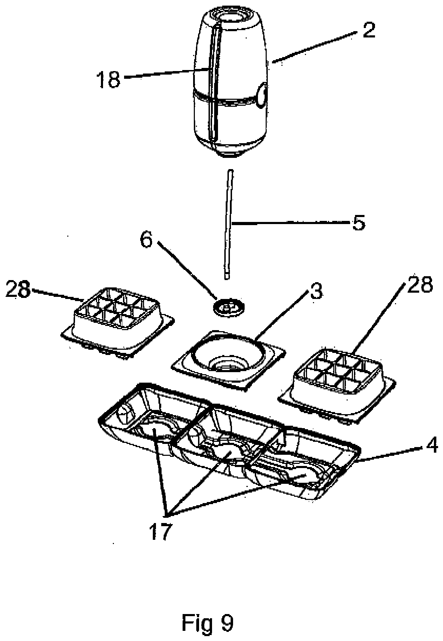

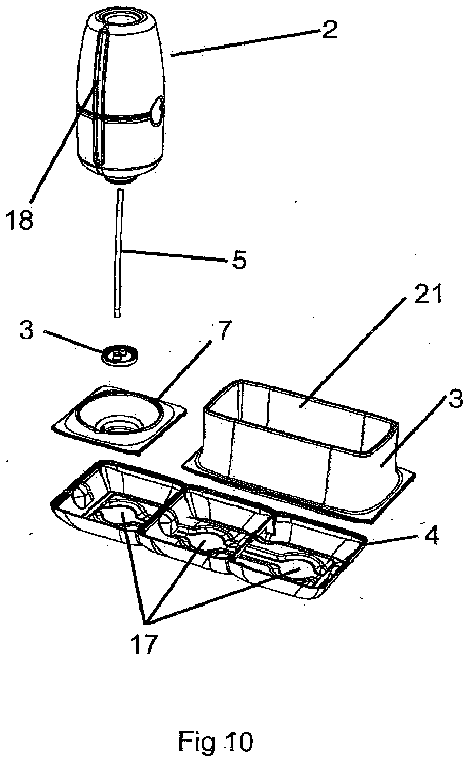

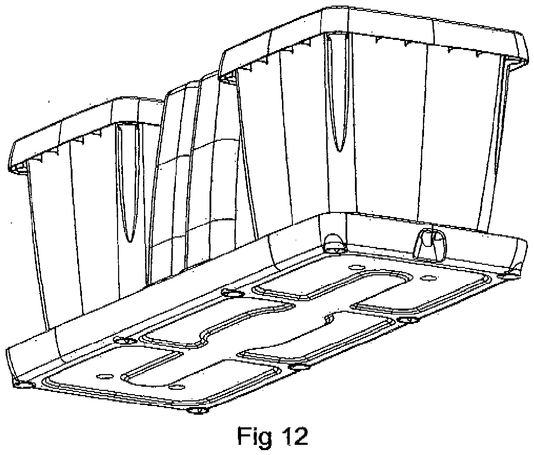

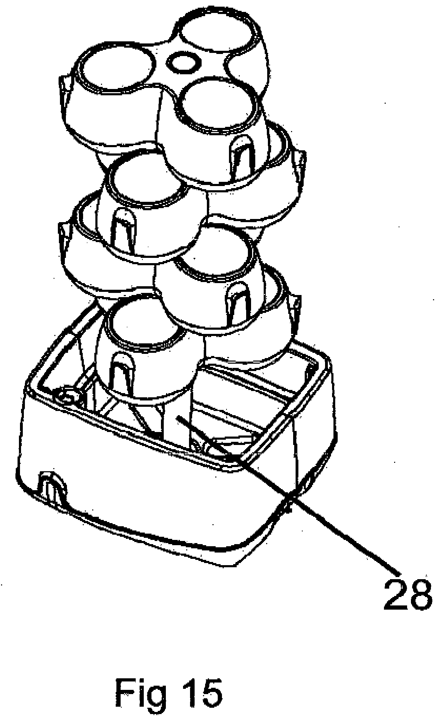

- Figures 5 to 15 are views which illustrate the embodiments of the invention.

### Detailed description of the invention

As shown in the drawings, the modular integrated system (1) for seeds germination, cultivation, planting, fertilizing and maintenance of plants, is comprised of:
- a liquid receiver (2) which includes a dosing element (3) comprising two holes, respectively, one for the passage of the air feeding tube (5) to the receiver (2) and another one (6) for the discharge of liquid from the receiver (2) under the action of gravity,

- a watertight platform (4) for containing liquid and which is supplied by the said liquid receiver;
wherein the regulation of the water flow from the receiver (2) is dictated by the difference in height between the air feeding tube (5) to the receiver and the tube (6), which has its lower end bevelled, for the discharge of liquid under the action of gravity, i.e. the water will be discharged from the receiver (2) only and if the water level in the platform (4) is lower than the length of the tube (5);
- at least one component (7) for fitting the liquid receiver (2) and/or for fitting at least one plant container;
- an absorbing cloth at the bottom of the component (4);
- drainage means (9) for removing the excess water from the platform (4); and
- aerating means (10) for the platform (4) being comprised of holes positioned above the water line.

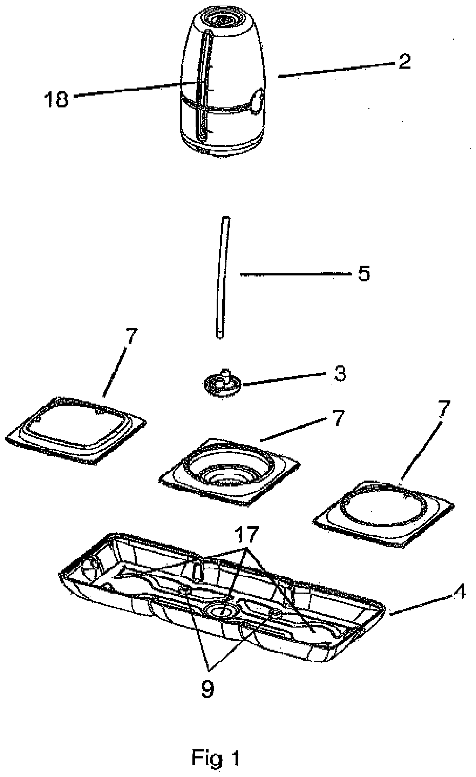

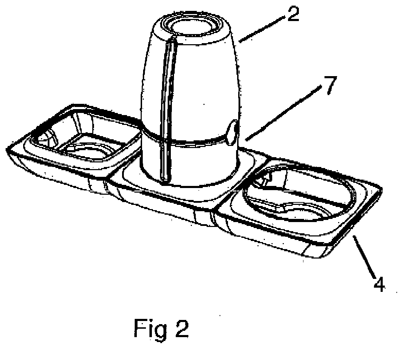

The simplest embodiment of the system which the object of the invention is depicted in Figures 1 and 2. Some of the aforementioned components are shown therein. It can also be noted that the bottom of the platform (4) is provided with channels and areas (17) that collect the water coming from the receiver and over which is placed an absorbing cloth (non-illustrated in the drawings).

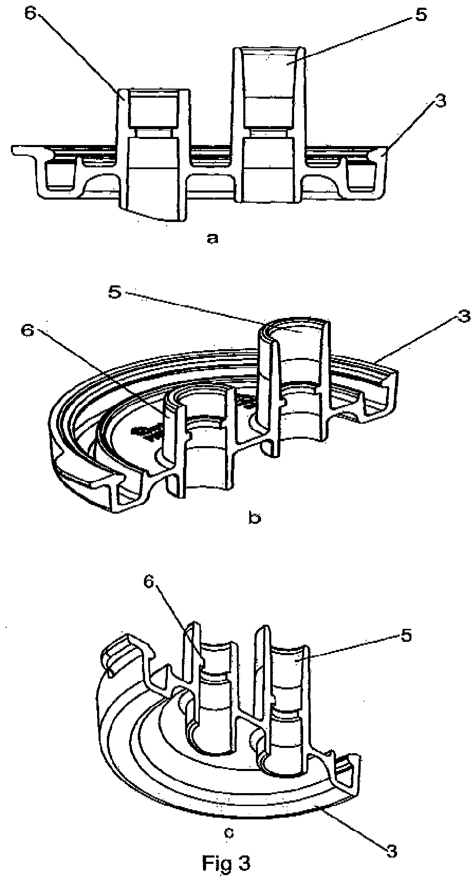

As shown in Figure 3, the tubes (5) and (6) are an integral part of the dosing element (3). In the said element (3), the tube (5) has a greater length than the tube (6). The tube (6) for discharge of the liquid under the action of gravity has its lower end bevelled in order to create a higher surface tension and consequently causing its operation to be easier. The different length of the tubes (5, 6), both above and under the base of the dosing element (3), will ensure the regulation and control of the liquid flow from the receiver (2). This flow is controlled by the difference in height between the air feeding tube (5) to the receiver and the tube (6) for the discharge of liquid under the action of gravity, i.e., the water will be discharged from the receiver (2) only and if the water level in the platform (4) is lower than the length of the tube (5);

As shown in Figure 1, the liquid receiver (2) can be removable. In this specific case, the cover of the removable receiver (2), which obviously works in the inverted position so as to fulfil its role, is comprised of the dosing element (3). As can be observed on the enclosed drawings, the removable receiver (2) may be undifferentiatedly fitted to any of the three parts (7).

Each one of the components (3) can be provided with an upper part (22), forming a whole with it and allowing a more specific use as regards the cultivation of plants. Also, the said components (3), with or without the upper part (22), can be put together thus forming a single unit (21).

The said removable receiver (2), as illustrated in the figures, can be provided with a vertical window (18) in order to allow its liquid level to be read. The receiver can also be provided with a cover (non-illustrated) having a vertical window as well, which is overlapped with the vertical window (18) so that the liquid level inside the receiver (2) can be read.

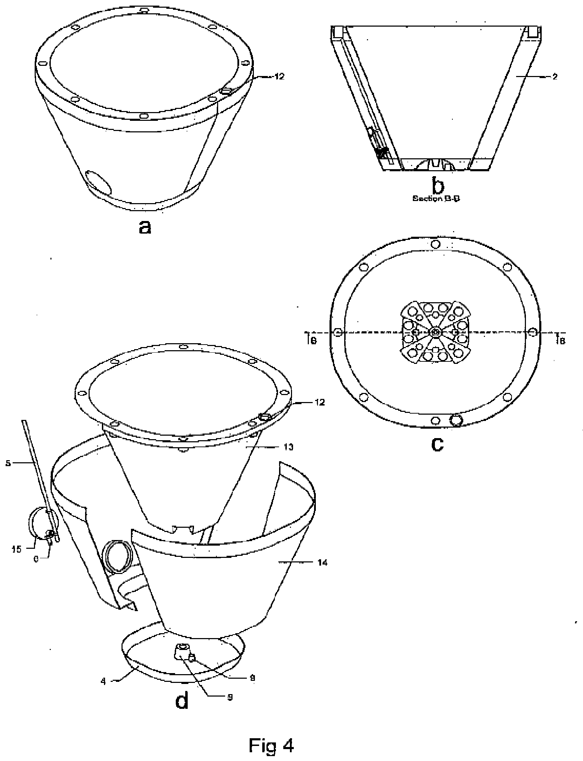

According to another embodiment of this invention, the liquid receiver is not removable, being instead an integral part of the plants container which is generally represented with reference (11). As can be observed in the figures 4, the aforementioned container (11) comprises an inner wall (13) and an outer wall (14), with the liquid receiver (2) being positioned in the space between those two walls. In this embodiment, the receiver (2) is provided with a filling nozzle (12) and, just like in the remaining embodiments, also with a tube (5) for air circulation and a tube (6) for liquid discharged. This embodiment of the invention, in which the liquid receiver is an integral part of the container (11), has also coupled an electronic box (15) which comprises all the devices allowing to regulate the liquid flow from the receiver (2) (i.e. the tubes (5, 6)) and warning means indicating when the liquid volume has reached its minimum level (for instance with light- or sound-emitting devices). The said box is also provided with level sensors and micro valves and eventually other devices such as, for example, mini solar panel, battery, telephone SIM card, etc. Other components of this embodiment will be mentioned hereinafter.

As can be observed in the figures, the system includes drainage means (9) for removing the excess water from the platform (4). The said means are comprised of, at least, a tubular bounce which opens outwards, projecting upwards from the bottom of the platform (4), and whose height determines the maximum level of water in the above mentioned platform (4).

In the said platform (4) there is a side groove (19) for the passage of a tube (20) with an absorbing cloth which is connected to another platform (4) in order to promote the transfer of liquid. Therefore, a liquid receiver (2) is able to supply more than one platform (4), thus ensuring the liquid supply to several containers with plants.

The platform (4) and the components (7), with or without the upper part, have a configuration whose shape is always suitable for assembling the latter into the platform. Each one of the components (7) has preferably a conic shape with a hole at its lower end.

The part (22) of the component (7) is provided with funnelled elements (23) developing downwards and a hole in the lower end for the platform (4), the said elements carrying an absorbing cloth (24) which is I-shaped, having upper flaps in the component (3) and lower flaps in the platform (4).

The component (21 or 22) can include cavities for germination (28).

In order to allow containers of different sizes to be fitted, diameter reducers were envisaged for the component (7), which in their turn will fit into the relevant holes (non-illustrated).

The components of the system which is the object of this invention are manufactured in moldable material.

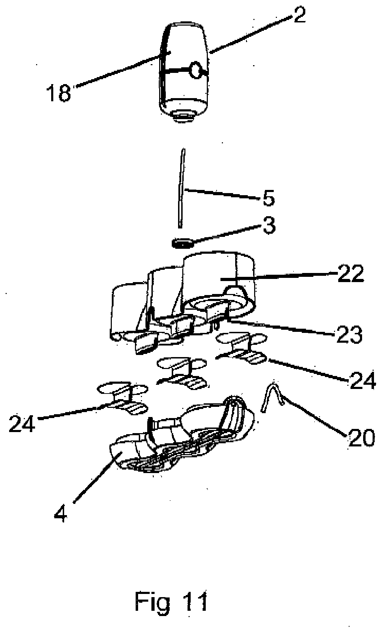

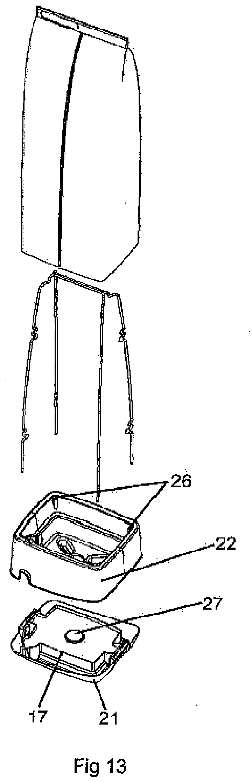

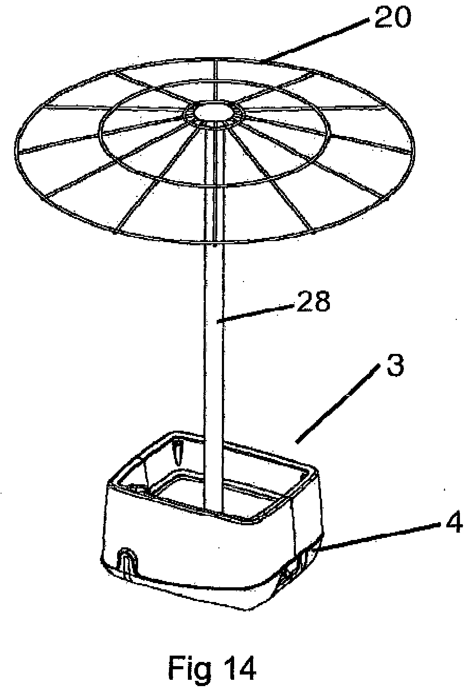

As evident to the skilled person, there are several possible applications as regards the disclosed system. As an example, the component (7) may include support element for rods or stakes (26), which are positioned next to each vertex of the inner wall in the upper part of the said component and designed to support a greenhouse element; a fitting element (27), with a pyramidal shape, aimed at fixing the supporting tube and guide bar (28). Examples of this are the embodiments depicted in the Figures 11, 13 and 14.

In the previous description a liquid receiver is referred to. Obviously, the term liquid shall be understood mainly as water, but also as water with products which are commonly used for plant cultivation, such as fertilizers, herbicides, pesticides, etc.

### Caption

- Modular integrated system (1);
- Removable liquid receiver (2);
- Dosing element (3);
- Watertight platform for containing liquid (4);
- Air feeding tube (5);
- Water tube (6);
- Component (7);
- Drainage means (9);
- Aerating means (10);
- Plants container (11);
- Receiver's filling nozzle (12);
- Receiver's walls (13, 14);
- Electronic box (15);
- Bounce of the drainage means (16);
- Irrigation channels (17);
- Vertical window (18);
- Groove (19);
- Groove's tube (20);
- Component (3 linked parts) (21);
- Upper part of the component (7) (22);
- Funnelled element (23);
- I-shaped cloth (24);
- Support element for rods or stakes (26);
- Fitting element (27);
- Supporting tube and guide bar (28).

## Claims

1. A modular integrated system (1) for seeds germination, cultivation, planting, fertilizing and maintenance of plants, which comprises:
- a liquid receiver (2) which includes a dosing element (3) comprising two holes, respectively, one for the passage of the air feeding tube (5) to the receiver (2) and another one (6) for the discharge of liquid from the receiver (2) under the action of gravity,
- a watertight platform (4) for containing liquid and which is supplied by the said liquid receiver;
wherein the regulation of the water flow from the receiver (2) is dictated by the difference in height between the air feeding tube (5) to the receiver and the tube (6) for the discharge of liquid under the action of gravity, i.e. the water will be discharged from the receiver (2) only and if the water level in the platform (4) is lower than the length of the tube (5);
- at least one component (7) for fitting the liquid receiver (2) and/or for fitting at least one plant container;
- drainage means (9) for removing the excess water from the platform (4);
**characterized in that** it further comprises:
- an absorbing cloth at the bottom of the component (4);
- aerating means (10) for the platform (4) being comprised of holes positioned above the water line; and **in that** the tube (6) for the discharge of liquid under the action of gravity has its lower end bevelled.

2. An integrated system (1), according to claim 1, **characterized in that** the tubes (5) and (6) are an integral part of the dosing element (3).

3. An integrated system (1), according to claim 1, **characterized in that** the liquid receiver (2) is removable.

4. An integrated system (1), according to claim 3, **characterized in that** the dosing element (3) acts as the cover of the removable liquid receiver (2).

5. An integrated system (1), according to claim 1, **characterized in that** the liquid receiver is an integral part of the plants container (11) being formed in a double wall (13, 14) of the said container.

6. An integrated system (1), according to claim 1, **characterized in that** the drainage means (9) for removing the excess water from the platform (4) comprise at least a tubular bounce, which opens outwards, projecting upwards from the bottom of the platform (4), and whose height determines the maximum level of water in the above mentioned platform (4).

7. An integrated system (1), according to claim 1, **characterized in that** the watertight platform (4) is provided with a side groove (19) for the passage of a tube (20) with an absorbing cloth which is connected to another platform (4) in order to promote the transfer of liquid.

8. An integrated system (1), according to claim 1, **characterized in that** the removable liquid receiver (2) is provided with a vertical window (18) so that the liquid level inside it can be read.

9. An integrated system (1), according to claim 1, **characterized in that** the removable liquid receiver (2) includes a cover, this being also provided with a vertical window, which is overlapped with the vertical window (18) so that the liquid level inside the receiver (2) can be read.

10. An integrated system (1), according to claim 1, **characterized in that** the liquid receiver (2), the components (3) and the watertight platform (4) are manufactured in a moldable material.

11. An integrated system (1), according to claim 1, **characterized in that** the removable receiver (2) is undifferentiatedly fitted into one of the three parts (7).

12. An integrated system (1), according to claim 1, **characterized in that** the parts (7) are put together in order to form a single unit (21).

13. An integrated system (1), according to claim 12, **characterized in that** the part (21) includes funnelled elements (23) developing downwards, with a hole in the lower end for the platform (4), the said elements carrying an absorbing cloth.

14. An integrated system (1), according to claim 1, **characterized in that** the platform (4) and the parts (7) have a configuration whose shape is always suitable for assembling the latter into the platform.

15. An integrated system (1), according to claim 1, **characterized in that** the part (7) has a conic shape with a hole at its lower end.

16. An integrated system (1), according to the previous claim, **characterized in that** the component (22) includes cavities for germination.

17. An integrated system (1), according to claim 1, **characterized in that** reducers are fitted into the relevant holes of the components (7, 3) so that containers of different sizes can be used.

18. An integrated system (1), according to claim 1, **characterized in that** the component (7) comprises:
- four elements for supporting rods or stakes (26) which are positioned next to each vertex of the inner wall in the upper part of the said component;
- a fitting element (27), with a pyramidal shape, aimed at fixing the supporting tube and guide bar (28).

## Patentansprüche

1. Ein modulares und integriertes System (1) für Samenkeimung, Anbau, Pflanzung, Düngung und Pflege der Pflanzen, welches folgendes enthält:
- ein Flüssigkeitssammler (2), welches ein Dosierungselement (3) mit zwei Bohrungen hat, jeweils eins für den Durchlass des Luftzuführschlauches (5) zum Sammler (2) und ein anderes (6) für den Flüssigkeitsablauf vom Sammler (2) durch die Schwerkraft,
- eine wasserdichte Plattform (4) für das Beinhalten von Flüssigkeit und welche von dem Sammler (2) versorgt wird;
worin die Regulierung des Wasserflusses vom Sammler (2) durch den Höhenunterschied zwischen dem Luftzuführschlauch (5) zum Sammler und des anderen Schlauches (6) für den Flüssigkeitsablauf unter Schwerkraft bestimmt wird, d.h. das Wasser wird vom Sammler (2) entladen, nur dann, wenn der Wasserspiegel in der Plattform (4) niedriger als die Länge des Schlauches (5) ist;
- mindestens eine Komponente (7) für die Anpassung des Flüssigkeitssammlers (2) und/oder für die Anpassung von mindestens einem Pflanzencontainer;
- Entwässerungsmittel (9) zur Entfernung des Wasserüberschusses von der Plattform (4);
**dadurch gekennzeichnet, dass** es weiterhin folgendes enthält:
- ein absorbierendes Tuch am Boden des Komponents;
- Belüftungsmittel (10) für die Plattform (4) vorgesehen mit Bohrungen über der Wasserlinie;
und dass
der Schlauch (6) für den Flüssigkeitsablauf durch die Schwerkraft, sein unteres Ende angeschrägt hat.

2. Ein integriertes System (1) nach Anspruch 1, **dadurch gekennzeichnet, dass** die Schläuche (5) und (6) ein integrales Bestandteil des Dosierungselements (3) sind.

3. Ein integriertes System (1), nach Anspruch 1, **dadurch gekennzeichnet, dass** der Flüssigkeitssammler (2) abnehmbar ist.

4. Ein integriertes System (1) nach Anspruch 3, **dadurch gekennzeichnet, dass** das Dosierungselement (3) als Abdeckung für den abnehmbaren Flüssigkeitssammler (2) wirkt.

5. Ein integriertes System (1) nach Anspruch 1, **dadurch gekennzeichnet, dass** der Flüssigkeitssammler (2) ein integrales Bestandteil des Pflanzencontainers (11) ist und sich in einer Doppelwand (13, 14) des genannten Containers befindet.

6. Ein integriertes System (1) nach Anspruch 1, **dadurch gekennzeichnet, dass** das Entwässerungsmittel (9) zur Entfernung des Wasserüberschusses von der Plattform (4) mindestens ein rohrförmigen Prellen, welcher nach außen geöffnet ist, aufwärts vom unteren Teil der Plattfrom (4) vorstehend, und dessen Höhe das maximalen Wasserspiegels der oben genannten Plattform (4) bestimmt.

7. Ein integriertes System (1) nach Anspruch 1, **dadurch gekennzeichnet, dass** die wasserdichte Plattform (4) ein Seitennut (19) für den Durchlauf eines Schlauches (20) enthält, mit einem absorbiebarem Tuch, welches mit einer anderen Plattform (4) verbunden ist, um die Flüssigkeisübertragung zu fördern.

8. Ein integriertes System (1) nach Anspruch 1, **dadurch gekennzeichnet, dass** der abnehmbare Flüssigkeitssammler (2) mit einem senkrechten Fenster (18) versehen ist, damit der Flüssigkeitsspiegel gelesen werden kann.

9. Ein integriertes System (1) nach Anspruch 1, **dadurch gekennzeichnet, dass** der abnehmbare Flüssigkeitssammler (2) eine Abdeckung umfasst, die auch mit einem senkrechten Fenster versehen ist und welche sich mit dem senkrechten Fenster (18) überschneidet, damit der Flüssigkeitsspiegel im Sammler (2) gelesen werden kann.

10. Ein integriertes System (1) nach Anspruch 1, **dadurch gekennzeichnet, dass** der abnehmbare Flüssigkeitssammler (2), die Elemente (3) und die wasserdichte Plattform (4) aus einem formbaren Material hergestellt werden.

11. Ein integriertes System (1) nach Anspruch 1, **dadurch gekennzeichnet, dass** der abnehmbare Flüssigkeitssammler (2) einheitlich in einem der drei Komponenten (7) montiert ist.

12. Ein integriertes System (1) nach Anspruch 1, **dadurch gekennzeichnet, dass** die Komponenten (7) als eine Einzeleinheit (21) zusammengesetzt werden.

13. Ein integriertes System (1) nach Anspruch 12, **dadurch gekennzeichnet, dass** das Bestandteil (21) trichterförmige Elemente (23) umfasst, die sich abwärts, mit einer Bohrung am unteren Ende der Plattform (4) erstrecken, die genannten Elemente haben ein absorbierbares Tuch.

14. Ein integriertes System (1) nach Anspruch 1, **dadurch gekennzeichnet, dass** die Plattform (4) und die Komponente (7) eine Konfiguration haben, dessen Form sich immer eignet, um diese letzten in die Plattform zu montieren.

15. Ein integriertes System (1) nach Anspruch 1, **dadurch gekennzeichnet, dass** die Komponente (7) kegelförmig ist und am unteren Ende eine Bohrung hat.

16. Ein integriertes System (1) nach vorherigem Anspruch, **dadurch gekennzeichnet, dass** die Komponente (22) zur Keimung Hohlräume umfasst.

17. Ein integriertes System (1) nach Anspruch 1, **dadurch gekennzeichnet, dass** die Reduzierer in die entsprechenden Bohrungen der Komponenten (7, 3) montiert sind, so dass Container mit verschiedenen Größen verwendet werden können.

18. Ein integriertes System (1) nach Anspruch 1, **dadurch gekennzeichnet, dass** die Komponente (7) folgendes enthält:
- vier Elemente zum Stützen von Stangen oder Pfählen (26), welche sich neben jedem Eckpunkt der Innenwand am oberen Teil der genannten Komponente befinden;
- ein Anpassungselement (27), mit Pyramidenform zum Fixieren des Befestigungsrohrs und der Führungsschiene (28).

## Revendications

1. Système intégré modulaire (1) pour la germination de graines, la culture, la plantation, la fertilisation et l'entretien de plantes, qui comprend :
- un récipient pour liquide (2) comportant un élément doseur (3) qui présente deux orifices dont respectivement l'un est destiné au passage d'un tube (5) pour une alimentation en air vers le récipient (2) et l'autre (6) à la sortie par gravité du liquide du récipient (2) ;
- une plateforme étanche (4) destinée à contenir le liquide, alimentée par ledit récipient pour liquide ;
où la régulation du flux d'eau sortant du récipient (2) est commandée par la différence de hauteur entre le tube (5) d'alimentation en air vers le récipient et le tube (6) de sortie par gravité du liquide, c'est-à-dire que l'eau ne sort du récipient (2) que si le niveau d'eau sur la plateforme (4) est inférieur à la longueur du tube (5) ;
- au moins une pièce (7) destinée à l'emboîtement du récipient pour liquide (2) et/ou à l'emboîtement d'au moins un conteneur de plantes ;
- des moyens (9) de drainage de l'excès d'eau de la plateforme (4) ;
**caractérisé en ce qu'**il comprend également :
- une toile de matière absorbante placée sur le fond de la pièce (4) ;
- des moyens d'aération (10) de la plateforme (4), constitués par des orifices situés au-dessus de la ligne d'eau ;
et **en ce que** :
- le tube (6) de sortie par gravité du liquide a son extrémité inférieure biseautée.

2. Système intégré (1) selon la revendication 1, **caractérisé en ce que** les tubes (5) et (6) font partie intégrante de l'élément doseur (3).

3. Système intégré (1) selon la revendication 1, **caractérisé en ce que** le récipient pour liquide (2) est amovible.

4. Système intégré (1) selon la revendication 3, **caractérisé en ce que** l'élément doseur (3) sert de couvercle pour le récipient pour liquide (2) amovible.

5. Système intégré (1) selon la revendication 1, **caractérisé en ce que** le récipient pour liquide fait partie intégrante du conteneur de plantes (11) formé dans une double paroi (13, 14) dudit récipient.

6. Système intégré (1) selon la revendication 1, **caractérisé en ce que** les moyens (9) de drainage de l'excès d'eau de la plateforme (4) comprennent au moins une saillie tubulaire, qui s'ouvre vers l'extérieur, se projetant vers le haut à partir du fond de la plateforme (4), et dont la hauteur détermine le niveau maximal d'eau dans ladite plateforme (4).

7. Système intégré (1) selon la revendication 1, **caractérisé en ce que** la plateforme étanche (4) est dotée d'une nervure latérale (19) pour le passage d'un tube (20) avec une toile de matière absorbante qui est liée à une autre plateforme (4) pour effectuer le transfert du liquide.

8. Système intégré (1) selon la revendication 1, **caractérisé en ce que** le récipient pour liquide (2) amovible est doté d'une fenêtre verticale (18) pour permettre la lecture du niveau de liquide dans son intérieur.

9. Système intégré (1) selon la revendication 1, **caractérisé en ce que** le récipient pour liquide (2) amovible comprend un couvercle, lequel est également doté d'une fenêtre verticale, qui est juxtaposée avec la fenêtre verticale (18) pour permettre la lecture du niveau de liquide à l'intérieur du récipient (2).

10. Système intégré (1) selon la revendication 1, **caractérisé en ce que** le récipient pour liquide (2), les pièces (3) et la plateforme étanche (4) sont fabriqués d'un matériau moulable.

11. Système intégré (1) selon la revendication 1, **caractérisé en ce que** le récipient (2) amovible s'emboîte indistinctement dans l'une des trois pièces (7).

12. Système intégré (1) selon la revendication 1, **caractérisé en ce que** les pièces (7) sont unies afin de former une seule unité (21).

13. Système intégré (1) selon la revendication 12, **caractérisé en ce que** la pièce (21) comprend des éléments en forme d'entonnoir (23) qui se développent vers le bas, avec une ouverture dans la partie inférieure pour la plateforme (4), lesdits éléments portant une toile de matière absorbante.

14. Système intégré (1) selon la revendication 1, **caractérisé en ce que** la plateforme (4) et les pièces (7) ont une configuration dont la forme est toujours appropriée pour monter celles-ci dans la plateforme.

15. Système intégré (1) selon la revendication 1, **caractérisé en ce que** la pièce (7) a une forme conique avec une ouverture dans la partie inférieure.

16. Système intégré (1) selon la revendication précédente, **caractérisé en ce que** la pièce (22) comprend des cavités pour la germination.

17. Système intégré (1) selon la revendication 1, **caractérisé en ce que** des réducteurs sont emboîtés dans les ouvertures respectives des pièces (7, 3) pour permettre l'utilisation de conteneurs de différentes dimensions.

18. Système intégré (1) selon la revendication 1, **caractérisé en ce que** la pièce (7) comprend :
- quatre éléments pour supporter des tiges ou des tuteurs (26) qui sont positionnés à côté de chacun des sommets de la paroi intérieure dans la partie supérieure de ladite pièce ;
- un élément d'emboîtement (27), en forme de pyramide, pour fixer le tube de support et de guidage (28).
